# EUROPÄISCHE PATENTSCHRIFT

(11) **EP 2 970 013 B1**
(45) Veröffentlichungstag und Bekanntmachung des Hinweises auf die Patenterteilung: **12.05.2021**
(21) Anmeldenummer: 14710221.4
(22) Anmeldetag: 06.03.2014
(51) Int. Cl.: B01J 37/08, B01J 35/00, B01J 21/12, B01J 35/02, C04B 35/64, C04B 111/00, C04B 35/195, C04B 35/185, B01D 46/24, B01J 29/70, C04B 38/00

(54) **VERFAHREN ZUR HERSTELLUNG EINES FORMKÖRPERS**
PROCESS FOR THE MANUFACTURE OF SHAPED BODIES AND SHAPED BODY
PROCEDE DE FABRICATION DE CORPS FACONNES ET CORPS EN FORME

(30) Priorität: 12.03.2013 DE 102013204276
(43) Veröffentlichungstag der Anmeldung: 20.01.2016
(60) Teilanmeldung: 20204908.6
(73) Patentinhaber: Hug Engineering AG, 8352 Elsau (CH)
(72) Erfinder: VIEWEGER, Georg, 88682 Salem (DE)
(74) Vertreter: Prinz & Partner mbB
(86) Internationale Anmeldenummer: PCT/EP2014/054400
(87) Internationale Veröffentlichungsnummer: WO 2014/139864

(56) Entgegenhaltungen:
- EP-A1- 1 447 130
- EP-A2- 1 428 807
- GB-A- 579 515
- GB-A- 1 527 566
- JP-A- S59 159 296
- US-A- 5 305 726
- Kapitel 2.1, 4.1.2, 4.1.3, 4.1.3 und 4.1.7: In: G. Routschka/H. Wuthnow: "Praxishandbuch Feuerfeste Werkstoffe; 5. Auflage", 14. Oktober 2011 (2011-10-14), Vulkan Verlag, Essen (DE), XP002726158, ISBN: 978-3-8027-3161-7 Seiten 15, 19, 40 - Bld 4.1, 53, 54 und 75; Tabelle 4.1,
- ACIMOVIC-PAVLOVIC Z ET AL: "Application Effects of refractory Linings Based on Cordierite and Talc during the Lost Foam Casting Process", INTERCERAM, SCHMID, FREIBURG, DE, Bd. 49, Nr. 6, 1. Januar 2000 (2000-01-01) , Seiten 438-441, XP001526056, ISSN: 0020-5214
- HOMBACH ET AL: "Beobachtungen an Cordierit-Mullit-Werkstoffen", SILIKAT-JOURNAL, GEKT : GLAS-, EMAIL-, KERAMO-TECHNIK,, Bd. 15, 1. Januar 1976 (1976-01-01), Seiten 285-289,291, XP009161016, ISSN: 0560-0421
- GROSJEAN P: "Cordierite-Ceramics", INTERCERAM, SCHMID, FREIBURG, DE, Bd. 42, Nr. 1, 1. Januar 1993 (1993-01-01) , Seiten 11-15, XP009161027, ISSN: 0020-5214
- SCHULLE W: "Tendenzen der Entwicklung bei Brennhilfsmittelwerkstoffen", SILIKATTECHNIK, VERLAG FUER BAUWESEN, BERLIN, DE, Bd. 36, Nr. 10, 1. Januar 1985 (1985-01-01), Seiten 313-315, XP009161012, ISSN: 0037-5233
- Gerald Routschka et al: "Chamotte", CHEMIE.DE, 1 January 1997 (1997-01-01), Retrieved from the Internet: URL:http://www.chemie.de/lexikon/Schamotte .html [retrieved on 2018-09-08]

## Beschreibung

Die vorliegende Erfindung betrifft ein Verfahren zur Herstellung eines Formkörpers.

Aus der DE 10 2005 036 394 A1 ist ein Verfahren zur Herstellung eines Formkörpers bekannt, bei welchem ein Werkstück aus einem Basisstoff geformt und anschließend bei Temperaturen oberhalb von 1.550 °C gesintert wird. Durch den Sintervorgang wird der Ausgangsstoff umgewandelt.

Die nachfolgend genannten Dokumente offenbaren verschiedene Vorrichtungen, Produkte, Verfahren und Verwendungen betreffend Keramikwerkstoffe, insbesondere Cordierit- und Mullitwerkstoffe:
- G.Routschka/H.Wuthnow: "Praxishandbuch Feuerfeste Werkstoffe; 5. Auflage", 14. Oktober 2011 (2011-10-14), Vulkan Verlag, Essen (DE), XP2726158 ISBN:978-3-8027-3161-7
- ACIMOVIC-PAVLOVIC Z ET AL: "Application Effects of refractory Linings Based on Cordierite and Talc during the Lost Foam Casting Process", INTERCERAM, SCHMID, FREIBURG, DE, Bd. 49, Nr. 6, 1. Januar 2000 (2000-01-01), Seiten 438-441, XP001526056, ISSN: 0020-5214
- HOMBACH ET AL: "Beobachtungen an Cordierit-Mullit-Werkstoffen", SILIKAT-JOURNAL, GEKT : GLAS-, EMAIL-, KERAMO-TECHNIK,, Bd. 15, 1. Januar 1976 (1976-01-01), Seiten 285-289,291, XP009161016, ISSN:0560-0421
- EP 1 428 807 A2
- EP 1 447 130 A1
- JP S59 159296 A
- GB 579 515 A
- GROSJEAN P: "Cordierite-Ceramics", INTERCERAM, SCHMID, FREIBURG, DE, Bd. 42, Nr. 1, 1. Januar 1993 (1993-01-01), Seiten 11-15, XP009161027, ISSN: 0020-5214
- SCHULLE W: "Tendenzen der Entwicklung bei Brennhilfsmittelwerkstoffen" SILIKATTECHNIK, VERLAG FUER BAUWESEN, BERLIN, DE, Bd. 36, Nr. 10, 1. Januar 1985 (1985-01-01), Seiten 313-315, XP009161012, ISSN: 0037-5233
- GB 1 527 566 A
- US 5 305 726 A

Der vorliegenden Erfindung liegt die Aufgabe zugrunde, ein Verfahren zur Herstellung eines Formkörpers bereitzustellen, mittels welchem ein Formkörper mit guter Hochtemperaturbeständigkeit einfach herstellbar ist.

Diese Aufgabe wird erfindungsgemäß durch ein Verfahren gemäß Anspruch 1 gelöst.

Dadurch, dass bei dem erfindungsgemäßen Verfahren die Teilchen des Basisstoffes, insbesondere des Mullitmaterials, unter Erhalt der Teilcheneigenschaft miteinander verbunden werden, kann der Formkörper besonders energieeffizient und schnell hergestellt werden. Insbesondere ist ein zeitintensives Sintern bei hohen Temperaturen nach dem Formen des Formkörpers entbehrlich.

Der pulverförmige Basisstoff umfasst vorzugsweise vorkalzinierten Mullit.

Ein Mullitmaterial ist Mullitschamotte.

Unter "Schamotte" ist ein gebranntes oder vorgebranntes und anschließend aufgemahlenes Material zu verstehen.

Das Mullitmaterial ist in dem pulverförmigen Basisstoff vorzugsweise in nennenswerter Menge, d.h. nicht nur als Verunreinigung, enthalten. Insbesondere kann vorgesehen sein, dass der pulverförmige Basisstoff mindestens ungefähr 20 Ma% (Massen-%), insbesondere mindestens ungefähr 40 Ma%, beispielsweise mindestens ungefähr 60 Ma% Mullitmaterial umfasst.

Unter "Teilcheneigenschaft" ist in dieser Beschreibung und den beigefügten Ansprüchen insbesondere zu verstehen, dass in einer Rasterelektronenmikroskopaufnahme (REM-Aufnahme) des fertigen Formkörpers klare Grenzen der Teilchen zu erkennen sind. Die Teilchen sind miteinander vernetzt, beispielsweise verklebt. Die Teilchen sind nicht vollständig aufgeschmolzen und mit weiteren Teilchen zu einem größeren Körper verschmolzen.

Unter einem Pulver oder einem pulverförmigen Stoff ist ein Stoff aus Teilchen zu verstehen, welche eine geringe Größe aufweisen, insbesondere kleiner als ungefähr 0,1 mm, beispielsweise kleiner als ungefähr 0,05 mm, sind.

Vorzugsweise erhält der Formkörper durch das Brennen desselben seine Formstabilität.

Günstig kann es sein, wenn das Gemisch Korund, Zirkonmullit und/oder Zirkonsilikat umfasst.

Korund kann beispielsweise Sinterkorund und/oder Schmelzkorund sein.

Vorzugsweise umfasst das Gemisch Korund, Zirkonmullit und/oder Zirkonsilikat in Pulverform.

Günstig kann es sein, wenn zumindest ein Stoff des Gemisches, insbesondere der Basisstoff, vor einer Zusammenführung mit weiteren Stoffen des Gemisches gesiebt wird und/oder wenn das gesamte Gemisch gesiebt wird, um eine gewünschte Korngrößenverteilung (Teilchengrößenverteilung) zu erhalten.

Insbesondere kann vorgesehen sein, dass Mullit, Zirkonmullit und/oder Korund, jeweils für sich genommen, gesiebt und anschließend mit weiteren Stoffen des Gemisches, insbesondere Mullit, Zirkonmullit und/oder Korund, zusammengeführt wird.

Günstig kann es ferner sein, wenn zumindest ein Stoff des Gemisches, insbesondere der Basisstoff, und/oder das gesamte Gemisch mit einer gewünschten Korngrößenverteilung (Teilchengrößenverteilung), beispielsweise mit einer der nachfolgend beschriebenen Teilchengrößenverteilungen, bereitgestellt wird.

Bei einer Ausgestaltung der Erfindung kann vorgesehen sein, dass mindestens ein Stoff des Gemisches vor einer Zusammenführung mit weiteren Stoffen des Gemisches derart gesiebt wird und/oder dass das gesamte Gemisch derart gesiebt wird,
- dass der d10-Wert des mindestens einen Stoffes und/oder des Gemisches mindestens ungefähr 5 µm beträgt,
- dass der d50-Wert des mindestens einen Stoffes und/oder des Gemisches mindestens ungefähr 35 µm beträgt und/oder
- dass der d90-Wert des mindestens einen Stoffes und/oder des Gemisches mindestens ungefähr 70 µm beträgt.

Unter einem d10-Wert ist dabei diejenige Teilchengröße zu verstehen, welche von 10 % der Teilchen des mindestens einen Stoffes bzw. des gesamten Gemisches unterschritten wird, während 90 % der Teilchen des mindestens einen Stoffes bzw. des Gemisches größer als der d10-Wert sind.

Unter einem d50-Wert ist dabei diejenige Teilchengröße zu verstehen, welche von 50 % der Teilchen des mindestens einen Stoffes bzw. des gesamten Gemisches unterschritten wird, während 50 % der Teilchen des mindestens einen Stoffes bzw. des Gemisches größer als der d50-Wert sind.

Unter einem d90-Wert ist dabei diejenige Teilchengröße zu verstehen, welche von 90 % der Teilchen des mindestens einen Stoffes bzw. des gesamten Gemisches unterschritten wird, während 10 % der Teilchen des mindestens einen Stoffes bzw. des Gemisches größer als der d90-Wert sind.

Bei einer Ausgestaltung der Erfindung kann ferner vorgesehen sein, dass mindestens ein Stoff des Gemisches vor einer Zusammenführung mit weiteren Stoffen des Gemisches derart gesiebt wird und/oder dass das gesamte Gemisch derart gesiebt wird,
- dass der d10-Wert des mindestens einen Stoffes und/oder des Gemisches höchstens ungefähr 10 µm beträgt,
- dass der d50-Wert des mindestens einen Stoffes und/oder des Gemisches höchstens ungefähr 40 µm beträgt und/oder
- dass der d90-Wert des mindestens einen Stoffes und/oder des Gemisches höchstens ungefähr 80 µm beträgt.

Ein Median des mindestens einen Stoffes und/oder des Gemisches beträgt vorzugsweise mindestens ungefähr 10 µm und/oder höchstens ungefähr 20 µm, beispielsweise ungefähr 15 µm.

Vorzugsweise weist der Formkörper ein Porenvolumen (Volumenanteil der Poren am Gesamtvolumen) von mindestens ungefähr 35 %, insbesondere mindestens ungefähr 40 %, und/oder höchstens ungefähr 65 %, beispielsweise höchstens ungefähr 58 %, auf.

Es kann vorgesehen sein, dass das Gemisch ein Porosierungsmittel umfasst. Beispielsweise kann vorgesehen sein, dass das Gemisch mindestens ungefähr 5 Ma% und/oder höchstens ungefähr 20 Ma%, beispielsweise ungefähr 10 Ma%, Porosierungsmittel umfasst und/oder dass dem Gemisch mindestens ungefähr 5 Ma% und/oder höchstens ungefähr 20 Ma%, beispielsweise ungefähr 10 Ma%, Porosierungsmittel zugeführt werden.

Ein amorpher Anteil des Formkörpers beträgt vorzugsweise höchstens ungefähr 2 %, beispielsweise zwischen ungefähr 0,5 % und ungefähr 1 %.

Ferner kann vorgesehen sein, dass das Gemisch vor dem Brennen und/oder der Formkörper nach dem Brennen zwischen ungefähr 5 Ma% und ungefähr 50 Ma%, insbesondere zwischen ungefähr 5 Ma% und ungefähr 30 Ma%, beispielsweise ungefähr 15 Ma%, Korund umfasst.

Bei einer weiteren Ausgestaltung der Erfindung kann vorgesehen sein, dass das Gemisch vor dem Brennen und/oder der Formkörper nach dem Brennen mindestens ungefähr 50 Ma% Mullit, mindestens ungefähr 10 Ma% Korund und/oder mindestens ungefähr 10 Ma% Zirkonmullit umfasst.

Günstig kann es sein, wenn das Gemisch vor dem Brennen und/oder der Formkörper nach dem Brennen höchstens ungefähr 80 Ma% Mullit, höchstens ungefähr 50 Ma% Korund und/oder höchstens ungefähr 30 Ma% Zirkonmullit umfasst.

Vorteilhaft kann es sein, wenn das Gemisch vor dem Brennen und/oder der Formkörper nach dem Brennen zwischen ungefähr 50 Ma% und ungefähr 80 Ma%, insbesondere zwischen ungefähr 60 Ma% und ungefähr 80 Ma%, beispielsweise ungefähr 70 Ma%, Mullit umfasst.

Ferner kann es vorteilhaft sein, wenn das Gemisch vor dem Brennen und/oder der Formkörper nach dem Brennen zwischen ungefähr 10 Ma% und ungefähr 50 Ma%, insbesondere zwischen ungefähr 10 Ma% und ungefähr 30 Ma%, beispielsweise ungefähr 20 Ma%, Korund, insbesondere Sinterkorund, umfasst.

Ferner kann vorgesehen sein, dass das Gemisch vor dem Brennen und/oder der Formkörper nach dem Brennen zwischen ungefähr 5 Ma% und ungefähr 30 Ma%, insbesondere zwischen ungefähr 10 Ma% und ungefähr 20 Ma%, beispielsweise ungefähr 10 Ma%, Zirkonmullit umfasst.

Der Formkörper wird bei einer Temperatur von höchstens ungefähr 1.400 °C gebrannt. Auf diese Weise kann ein Verbinden der Teilchen des Basisstoffes miteinander unter Erhalt der Teilcheneigenschaft ermöglicht werden. Insbesondere kann verhindert werden, dass eine unerwünschte Umwandlung des Basisstoffs, beispielsweise ein Aufschmelzen der Teilchen des Basisstoffs, bei einer Temperatur oberhalb von ungefähr 1.400 °C eintritt.

Die Temperatur wird vorzugsweise so gewählt, dass Festkörperreaktionen zur Bildung des formstabilen Formkörpers führen.

Hierbei wird vorzugsweise das Auftreten einer Schmelze, insbesondere einer Schmelze des pulverförmigen Mullitmaterials, verhindert.

Bei einer Ausgestaltung der Erfindung ist es vorgesehen, dass der Formkörper bei einer Temperatur von ungefähr 1.300 °C gebrannt wird. Bei dieser Temperatur wird eine feste Verbindung der Teilchen des Basisstoffes miteinander unter Erhalt der Teilcheneigenschaft gewährleistet.

Günstig kann es sein, wenn der Formkörper in einem Brennzyklus mit einer Dauer von mindestens ungefähr 300 Minuten und/oder höchstens ungefähr 480 Minuten, beispielsweise ungefähr 360 Minuten, gebrannt wird.

Unter einer Dauer des Brennzyklus ist dabei die Zeit zwischen einem Beginn des Brennvorganges des Formkörpers bis zu einem Ende des Brennvorganges, insbesondere einer Entnahme des Formkörpers aus einem Ofen, zu verstehen.

Insbesondere ist hierunter die Zeitdauer zwischen dem Beginn des Brennvorganges und dem Erkalten des gebrannten Formkörpers zu verstehen.

Der Formkörper ist insbesondere ein Wabenkörper.

Vorzugsweise ist der Formkörper ein Keramik-Formkörper, insbesondere ein poröser Keramik-Formkörper.

Der Formkörper weist vorzugsweise einzelne oder mehrere der im Zusammenhang mit dem erfindungsgemäßen Verfahren beschriebenen Merkmale und/oder Vorteile auf. Ferner weist der Formkörper vorzugsweise einzelne oder mehrere Merkmale und/oder Vorteile auf, welche aus der Durchführung einzelner oder mehrerer der vorstehend beschriebenen Verfahrensschritte resultieren.

Der Formkörper ist vorzugsweise aus einem pulverförmigen Material hergestellt. Vorzugsweise sind die Oberflächen und/oder Grenzflächen der Teilchen des Mullitmaterials im Formkörper im Wesentlichen so wie die Oberflächen von Teilchen eines gemahlenen Mullitmaterials. Insbesondere mittels einer Rasterelektronenmikroskopaufnahme sind vorzugsweise klare Grenzen der Teilchen des Mullitmaterials zur Umgebung erkennbar. Die Teilchen des Mullitmaterials sind vorzugsweise nicht aufgeschmolzen, sondern insbesondere lediglich eingebettet und/oder miteinander vernetzt, beispielsweise punktuell stoffschlüssig miteinander verbunden.

Der Formkörper ist ein Wabenkörper, welcher ein Filterkörper ist.

Insbesondere eignet sich der Formkörper zur Verwendung als Wandstromfilter und/oder als Durchflussfilter, gegebenenfalls nach einer Weiterbearbeitung desselben.

Der Formkörper kann beispielsweise in einem Extrusionsverfahren geformt werden.

Ein als Wabenkörper ausgebildeter Formkörper weist vorzugsweise matrixförmig angeordnete Waben auf. Insbesondere kann vorgesehen sein, dass der Wabenkörper einen quadratischen Querschnitt aufweist und Waben (Zellen) umfasst, welche matrixförmig angeordnet und zylindrisch ausgebildet sind, wobei die Waben (Zellen) vorzugsweise ebenfalls einen quadratischen Querschnitt aufweisen.

Günstig kann es sein, wenn der Formkörper 100, 200 oder 300 Zellen pro Quadratzoll (cells per square inch) umfasst.

Ferner kann das erfindungsgemäße Verfahren zur Herstellung eines Formkörpers einzelne oder mehrere der nachfolgend beschriebenen Merkmale und/oder Vorteile aufweisen:
Die Teilchen des Basisstoffes bleiben beim Brennen des Formkörpers chemisch und/oder physikalisch im Wesentlichen unverändert.

Vorzugsweise wird das Mullitmaterial des Formkörpers nicht oder nur in unwesentlichem Umfang während des Brennens des Formkörpers durch Umwandlung eines Basisstoffes hergestellt.

Vorzugsweise erfolgt beim Brennen des Formkörpers keine oder nur eine unwesentliche Phasenumwandlung des Basisstoffes in eine gewünschte Mineralphase, insbesondere in Mullit.

Der Formkörper weist vorzugsweise keine Ausdehnungsanisotropie auf.

Ein Thermoschockparameter des Formkörpers ist vorzugsweise größer als 300 K.

Der Formkörper wird mit einem Temperaturgradienten von mindestens ungefähr 2.000 K pro Stunde gebrannt.

Ferner kann vorgesehen sein, dass eine Kombination aus Sintermullit, Sinterkorund, Zirkonmullit, Zirkonsilikat und/oder einem Sinteradditiv aus der Gruppe der Alkalimetalle und/oder Erdalkalimetalle zur Herstellung eines Formkörpers verwendet wird.

Der Formkörper kann insbesondere als ein Rußfilter, insbesondere als ein Dieselruß-Partikel-Filter, verwendet werden.

Der Formkörper ist vorzugsweise formstabil bis zu Temperaturen von mehr als ungefähr 1.600 °C, insbesondere bei der Verwendung eines Mullitmaterials mit einem Thermoschockparameter von mehr als 200 K.

Der Basisstoff ist vorzugsweise ein vorgesintertes Material, welches insbesondere durch ein reaktives Sinterverhalten mit einem Sinteradditiv zu einem formstabilen Körper gebrannt werden kann.

Durch eine selektive Siebung mindestens eines Stoffes, insbesondere des Basisstoffes, und/oder des Gemisches kann vorzugsweise ein Porenvolumen, insbesondere mit einer Porenradienverteilung zwischen ungefähr 0,004 mm bis ungefähr 0,045 mm, gezielt eingestellt werden.

Insbesondere dann, wenn der Formkörper ein feinwandiger Wabenkörper ist, kann die Verwendung von Porosierungsmittel zum Einstellen des Porenvolumens und des Medians der Teilchengrößenverteilung vorteilhaft sein. Dies ist insbesondere dann vorteilhaft, wenn der Abstand der Zentren zweier benachbarter, parallel zueinander verlaufender Wabenwände des Formkörpers (sogenannter Pitch P) relativ klein, beispielsweise kleiner als 0,27 mm, ist.

Der Formkörper ist vorzugsweise alkalibeständiger und korrosionsbeständiger als Mullitformkörper, welche gemäß bekannten Herstellungsverfahren bei sehr hohen Temperaturen gesintert werden.

Der Ausdehnungskoeffizient des beispielsweise hauptsächlich Mullit umfassenden Formkörpers beträgt beispielsweise ungefähr 5,2 x 10⁻⁶/K.

Vorteilhaft kann es sein, wenn der Formkörper mit einer Beschichtung, insbesondere mit einer katalytisch wirksamen Beschichtung, versehen wird oder ist.

Der Formkörper kann beispielsweise in einem Pressverfahren und/oder in einem Extrusionsverfahren hergestellt werden.

Es kann vorgesehen sein, dass der pulverförmige Basisstoff, insbesondere das Mullitmaterial, vorgebrannt ist, beispielsweise bei einer Temperatur bis ungefähr 1.200 °C. Beim Brennen des Formkörpers wird der pulverförmige Basisstoff dann vorzugsweise fertiggebrannt, um seine endgültige chemische Eigenschaft zu erhalten. Die Teilcheneigenschaft der Teilchen des Basisstoffs bleibt dabei jedoch erhalten.

Vorzugsweise umfasst das Gemisch und/oder der Formkörper nach dem Brennen Aluminiumoxid (Al₂O₃), Glas, insbesondere Magnesium-AluminiumSilikat, Mullit und/oder Alumosilikat.

Vorzugsweise wird Aluminiumoxid (Al₂O₃) dem Gemisch überstöchiometrisch hinzugegeben. Hierdurch kann der Formkörper bei einer unerwünschten Überhitzung des Formkörpers während dessen Verwendung, beispielsweise als Partikelfilter, nachsintern, bevor eine Beschädigung eintritt.

Vorteilhaft kann es sein, wenn das Gemisch einen Zuschlagstoff zur Erhöhung der Festigkeit des Formkörpers umfasst.

Der Thermoschockparameter ist insbesondere ein relatives Maß für eine akzeptable Temperaturdifferenz, basierend auf dem Verhältnis zwischen der Biegefestigkeit des Materials und der Spannung, welche durch einen Temperaturgradienten (in Kelvin pro Minute oder Kelvin pro Stunde) aufgeprägt wird. Ein Formkörper aus SiC weist einen Thermoschockparameter von beispielsweise höchstens ungefähr 160 K auf. Ein Formkörper weist vorzugsweise einen Thermoschockparameter von mindestens ungefähr 180 K auf.

Der Temperaturgradient bezeichnet ein räumliches oder zeitabhängiges Temperaturgefälle und wird in Kelvin pro Meter bzw. Kelvin pro Minute oder Kelvin pro Stunde gemessen. Insbesondere zur Bezeichnung der Aufheizgeschwindigkeit wird dabei das zeitabhängige Temperaturgefälle in Kelvin pro Minute im Bereich zwischen ungefähr 120 °C bis beispielsweise auf ungefähr 2.000 °C angegeben. Ein kleinerer Temperaturgradient kann zur Erhöhung des Ausdehnungskoeffizienten, zur Veränderung des Porengefüges und/oder zur Abnahme der Festigkeit führen. Ein großer Temperaturgradient, beispielsweise größer als ungefähr 2.300 °C/h, kann zu einem formstabilen Formkörper, insbesondere Wabenkörper, mit ausreichender Festigkeit führen.

Als Porosierungsmittel zum Einstellen des Porosierungsgrades und/oder einer Porengröße kann beispielsweise Graphit, Acrylat, Acrylglas, Kokosnussmehl und/oder Mais verwendet werden.

Weitere bevorzugte Merkmale und/oder Vorteile der Erfindung sind Gegenstand der nachfolgenden Beschreibung einzelner Ausführungsbeispiele.

Bei einer ersten nicht erfindungsgemäßen Ausführungsform eines Verfahrens zur Herstellung eines Formkörpers, insbesondere eines Wabenkörpers, beispielsweise eines Dieselruß-Partikel-Filters (DPF), ist vorgesehen, dass als Ausgangsstoff ein Gemisch verwendet wird. Das Gemisch umfasst einen pulverförmigen Basisstoff,
welcher vorgebrannte, kalzinierte Stoffe, beispielsweise Cordierit, Mullit, Sintermullit, Korund, Sinterkorund und Zirkonmullit umfasst.

Die Stoffe werden aufgemahlen und/oder gesiebt, um eine gewünschte Korngrößenverteilung (Teilchengrößenverteilung) zu erhalten.

Es kann vorgesehen sein, dass durch eine geänderte Siebung des Gemisches, insbesondere des Basisstoffs, eine Porengrößenverteilung mit einem Median von ungefähr 20 µm erhalten wird. Das Gemisch, insbesondere der pulverförmige Basisstoff, wird hierzu insbesondere derart gesiebt, dass der d10-Wert zwischen ungefähr 5 µm und ungefähr 10 µm beträgt, dass der d50-Wert zwischen ungefähr 35 µm und ungefähr 40 µm beträgt und dass der d90-Wert zwischen ungefähr 70 µm und ungefähr 80 µm beträgt.

Die mineralische Zusammensetzung des Basisstoffs beträgt bei der ersten nicht erfindungsgemäßen Ausführungsform des Verfahrens ungefähr 60 Ma% Cordierit, ungefähr 15 Ma% Korund und ungefähr 25 Ma% Mullit. Dem Gemisch wird vorzugsweise ein Sinterhilfsmaterial beigefügt. Insbesondere wird eine wässrige Lösung, welche ungefähr 0,1 Ma% bis ungefähr 2 Ma% Alkali- und/oder Erdalkali-Ionen umfasst, zugemischt.

Das Gemisch wird dann in einem Pressverfahren oder einem Extrusionsverfahren in eine gewünschte Form gebracht.

Der so erhaltene geformte Formkörper kann dann beispielsweise gefriergetrocknet und weiterverarbeitet werden.

Insbesondere wird der Formkörper anschließend gebrannt, um seine endgültige Festigkeit zu erhalten.

Der Formkörper wird dabei beispielsweise in einem Durchlaufofen mit einer Schubgeschwindigkeit von 10 bis 30 cm/min, beispielsweise ungefähr 20 cm/min, und einem Temperaturgradienten von mehr als 2.200 K/h gebrannt. Die Brenndauer von dem Beginn des Brennvorgangs bis zum Abkühlen des Formkörpers beträgt zwischen ungefähr 300 Minuten und ungefähr 480 Minuten, beispielsweise ungefähr 360 Minuten.

Die Temperatur des Formkörpers während des Brennens beträgt höchstens ungefähr 1.400 °C, beispielsweise ungefähr 1.330 °C. Hierdurch kann gewährleistet werden, dass die Teilchen des pulverförmigen Basisstoffes, insbesondere des Cordieritmaterials und/oder des Mullitmaterials, auch nach dem Durchführen des Brennschrittes unverändert ihre Teilcheneigenschaft aufweisen. Insbesondere sind bei geeigneter vergrößerter Aufnahme auch nach Durchführen des Brennschrittes klare Grenzen oder Ränder der Teilchen des Basisstoffes im Formkörper erkennbar.

Nach der Fertigstellung des Formkörpers, insbesondere nach dem Brennen und Abkühlen des Formkörpers weist der Formkörper beispielsweise einen Ausdehnungskoeffizienten zwischen ungefähr 1,7 bis 4 x 10⁻⁶/K auf, insbesondere im Temperaturbereich zwischen ungefähr 20 °C und ungefähr 800 °C.

Der Formkörper kann insbesondere als Wabenkörper, beispielsweise als Dieselruß-Partikel-Filter verwendet werden. Hierzu kann der Formkörper beispielsweise mit einer katalytischen Beschichtung versehen werden.

Eine zweite erfindungsgemäße Ausführungsform eines Verfahrens zur Herstellung eines Formkörpers sowie der hierdurch erhältliche Formkörper unterscheiden sich von dem Verfahren und dem Formkörper gemäß der ersten Ausführungsform im Wesentlichen dadurch, dass der pulverförmige Basisstoff ungefähr 70 Ma% Sintermullit, ungefähr 20 Ma% Sinterkorund und ungefähr 10 Ma% Zirkonmullit umfasst. Der hierbei erhältliche Formkörper weist einen Ausdehnungskoeffizienten von ungefähr 5,2 x 10⁻⁶/K im Temperaturbereich zwischen ungefähr 20 °C und ungefähr 800 °C auf.

Im Übrigen stimmen das Verfahren zur Herstellung eines Formkörpers und der Formkörper gemäß der zweiten Ausführungsform hinsichtlich der Herstellungsschritte, des Aufbaus, der Eigenschaften und der Funktion mit dem Verfahren zur Herstellung eines Formkörpers bzw. mit dem Formkörper gemäß der ersten Ausführungsform überein, so dass auf deren vorstehende Beschreibung insoweit Bezug genommen wird.

Dadurch, dass bei sämtlichen Verfahren zur Herstellung eines Formkörpers beim Brennen des Formkörpers Teilchen des Basisstoffes unter Erhalt der Teilcheneigenschaft miteinander verbunden werden, kann der Formkörper einfach hergestellt werden und eine hohe Temperaturbeständigkeit aufweisen.

## Patentansprüche

1. Verfahren zur Herstellung eines Formkörpers, welcher ein Wabenkörper ist, der ein Filterkörper ist, umfassend:
- Bereitstellen eines Gemisches, umfassend einen pulverförmigen Basisstoff, welcher ein vorgebranntes und aufgemahlenes Mullitmaterial umfasst, wobei das Mullitmaterial Mullitschamotte ist;
- Herstellen eines Formkörpers durch Formen des Gemisches;
- Brennen des Formkörpers bei einer Temperatur von höchstens 1400 °C und mit einem Temperaturgradienten von mindestens 2000 K/h, so dass Teilchen des Basisstoffes unter Erhalt der Teilcheneigenschaft miteinander verbunden werden, wobei in einer Rasterelektronenmikroskopaufnahme (REM-Aufnahme) des fertigen Formkörpers klare Grenzen der Teilchen zu erkennen sind, und wobei die Teilchen des Basisstoffes miteinander vernetzt, beispielsweise verklebt, werden und wobei die Teilchen des Basisstoffes nicht vollständig aufgeschmolzen und mit weiteren Teilchen zu einem größeren Körper verschmolzen werden,
wobei das Gemisch vor dem Brennen und/oder der Formkörper nach dem Brennen mindestens 50 Ma% Mullit umfasst.

2. Verfahren nach Anspruch 1, wobei das Gemisch Korund, Zirkonmullit und/oder Zirkonsilikat umfasst.

3. Verfahren nach Anspruch 1 oder 2, wobei mindestens ein Stoff des Gemisches vor einer Zusammenführung mit weiteren Stoffen des Gemisches derart gesiebt wird und/oder dass das gesamte Gemisch derart gesiebt wird,
- dass der d10-Wert des mindestens einen Stoffes und/oder des Gemisches mindestens 5 µm beträgt,
- dass der d50-Wert des mindestens einen Stoffes und/oder des Gemisches mindestens 35 µm beträgt und/oder
- dass der d90-Wert des mindestens einen Stoffes und/oder des Gemisches mindestens 70 µm beträgt.

4. Verfahren nach einem der Ansprüche 1 bis 3, wobei mindestens ein Stoff des Gemisches vor einer Zusammenführung mit weiteren Stoffen des Gemisches derart gesiebt wird und/oder dass das gesamte Gemisch derart gesiebt wird,
- dass der d10-Wert des mindestens einen Stoffes und/oder des Gemisches höchstens 10 µm beträgt,
- dass der d50-Wert des mindestens einen Stoffes und/oder des Gemisches höchstens 40 µm beträgt und/oder
- dass der d90-Wert des mindestens einen Stoffes und/oder des Gemisches höchstens 80 µm beträgt.

5. Verfahren nach einem der Ansprüche 1 bis 4, wobei das Gemisch vor dem Brennen und/oder der Formkörper nach dem Brennen mindestens 10 Ma% Korund und/oder mindestens 10 Ma% Zirkonmullit umfasst.

6. Verfahren nach einem der Ansprüche 1 bis 5, wobei das Gemisch vor dem Brennen und/oder der Formkörper nach dem Brennen höchstens 80 Ma% Mullit, höchstens 50 Ma% Korund und/oder höchstens 30 Ma% Zirkonmullit umfasst.

7. Verfahren nach einem der Ansprüche 1 bis 6, wobei der Formkörper in einem Brennzyklus mit einer Dauer von mindestens 300 min gebrannt wird.

8. Verfahren nach einem der Ansprüche 1 bis 6, wobei der Formkörper in einem Brennzyklus mit einer Dauer von höchstens 480 min gebrannt wird.

## Claims

1. Method for producing a moulded article, which is a honeycomb body that is a filter body, comprising:
- providing a mixture comprising a powdered base material which comprises a pre-fired and ground mullite material, wherein the mullite material is mullite chamotte;
- producing a moulded article by moulding the mixture;
- firing the moulded article at a temperature of at most 1400°C and at a temperature gradient of at least 2000 K/h so that particles of the base material are bonded to one another while preserving the particulate property, wherein in a scanning electron micrograph (SEM image) of the finished moulded article, clear boundaries of the particles can be seen, and wherein the particles of the base material are integrated with one another, for example by adhesion, and wherein the particles of the base material are not fully melted and are fused with further particles into a larger body,
wherein the the mixture before firing, and/or the moulded article after firing, comprises at least 50% by mass of mullite.

2. Method according to Claim 1, wherein the mixture comprises corundum, zircon mullite and/or zircon silicate.

3. Method according to either of Claims 1 or 2, wherein at least one substance of the mixture is screened before a fusion with further substances of the mixture and/or that the whole mixture is screened such that
- the d10 value of the at least one substance and/or of the mixture is at least 5 µm,
- the d50 value of the at least one substance and/or of the mixture is at least 35 µm, and/or
- the d90 value of the at least one substance and/or of the mixture is at least 70 µm.

4. Method according to any one of Claims 1 to 3, wherein at least one substance of the mixture is screened before a fusion with further substances of the mixture and/or that the whole mixture is screened such that
- the d10 value of the at least one substance and/or of the mixture is at most 10 µm,
- the d50 value of the at least one substance and/or of the mixture is at most 40 µm, and/or
- the d90 value of the at least one substance and/or of the mixture is at most 80 µm.

5. Method according to any one of Claims 1 to 4, wherein the mixture before the firing and/or the moulded article after the firing comprises at least 10% by mass of corundum and/or at least 10% by mass of zircon mullite.

6. Method according to any one of Claims 1 to 5, wherein the mixture before the firing and/or the moulded article after the firing comprises at most 80% by mass of mullite, at most 50% by mass of corundum and/or at most 30% by mass of zircon mullite.

7. Method according to any one of Claims 1 to 6, wherein the moulded article is fired in a firing cycle with a duration of at least 300 min.

8. Method according to any one of Claims 1 to 6, wherein the moulded article is fired in a firing cycle with a duration of at most 480 min.

## Revendications

1. Procédé pour la fabrication d'un corps moulé, lequel est un corps en nid d'abeille, qui est un corps filtrant, comprenant :
- la fourniture d'un mélange comprenant une matière de base pulvérulente, laquelle comprend un matériau de mullite précuit et moulu, dans lequel le matériau de mullite est de la chamotte de mullite ;
- la fabrication d'un corps moulé en moulant le mélange ;
- la cuisson du corps moulé à une température de 1 400 °C au maximum et avec un gradient de température d'au moins 2 000 K/h de sorte que des particules de la matière de base soient reliées les unes aux autres en préservant la propriété des particules, dans lequel des limites claires des particules sont identifiables sur un cliché par microscopie électronique à balayage (cliché MEB) du corps moulé fini, et dans lequel les particules de la matière de base sont réticulées entre elles, par exemple sont collées entre elles, et dans lequel les particules de la matière de base ne sont pas totalement fondues et sont assemblées par fusion à d'autres particules pour former un corps plus grand,
dans lequel le mélange comprend avant la cuisson et/ou le corps moulé comprend après la cuisson au moins 50 % en masse de mullite.

2. Procédé selon la revendication 1, dans lequel le mélange comprend du corindon, de la mullite de zirconium et/ou du silicate de zirconium.

3. Procédé selon la revendication 1 ou 2, dans lequel au moins une matière du mélange est criblée avant un regroupement avec d'autres matières du mélange et/ou la totalité du mélange est criblée de telle manière que
- la valeur d10 de l'au moins une matière et/ou du mélange soit d'au moins 5 µm,
- la valeur d50 de l'au moins une matière et/ou du mélange soit d'au moins 35 µm et/ou
- la valeur d90 de l'au moins une matière et/ou du mélange soit d'au moins 70 µm.

4. Procédé selon l'une quelconque des revendications 1 à 3, dans lequel au moins une matière du mélange est criblée avant un regroupement avec d'autres matières du mélange et/ou la totalité du mélange est criblée de telle manière que
- la valeur d10 de l'au moins une matière et/ou du mélange soit de 10 µm au maximum,
- la valeur d50 de l'au moins une matière et/ou du mélange soit de 40 µm au maximum, et/ou
- la valeur d90 de l'au moins une matière et/ou du mélange soit de 80 µm au maximum.

5. Procédé selon l'une quelconque des revendications 1 à 4, dans lequel le mélange comprend avant la cuisson et/ou le corps moulé comprend après la cuisson au moins 10 % en masse de corindon et/ou au moins 10 % en masse de mullite de zirconium.

6. Procédé selon l'une quelconque des revendications 1 à 5, dans lequel le mélange comprend avant la cuisson et/ou le corps moulé comprend après la cuisson 80 % en masse de mullite au maximum, 50 % en masse de corindon au maximum et/ou 30 % en masse de mullite de zirconium au maximum.

7. Procédé selon l'une quelconque des revendications 1 à 6, dans lequel le corps moulé est cuit lors d'un cycle de cuisson avec une durée d'au moins 300 min.

8. Procédé selon l'une quelconque des revendications 1 à 6, dans lequel le corps moulé est cuit lors d'un cycle de cuisson avec une durée de 480 min au maximum.
